# EUROPÄISCHE PATENTSCHRIFT

(11) **EP 2 580 834 B1**
(45) Veröffentlichungstag und Bekanntmachung des Hinweises auf die Patenterteilung: **18.12.2019**
(21) Anmeldenummer: 10724851.0
(22) Anmeldetag: 11.06.2010
(51) Int. Cl.: H02J 3/18

(54) **VORHERSAGBARES EINSPEISEN VON BLINDLEISTUNGEN**
PREDICTABLE FEEDING OF REACTIVE POWERS
INJECTION PRÉVISIBLE DE PUISSANCES RÉACTIVES

(43) Veröffentlichungstag der Anmeldung: 17.04.2013
(73) Patentinhaber: Siemens Aktiengesellschaft, 80333 München (DE)
(72) Erfinder: HERNANDEZ MANCHOLA, Alvaro Jose, 91052 Erlangen (DE); SCHETTLER, Frank, 91058 Erlangen (DE); STROBL, Bernhard, 91080 Uttenreuth (DE)
(86) Internationale Anmeldenummer: PCT/EP2010/058240
(87) Internationale Veröffentlichungsnummer: WO 2011/154052

(56) Entgegenhaltungen:
- EP-A2- 0 438 059
- EP-A2- 0 446 451
- WO-A2-2009/083448
- FR-A1- 2 693 602
- US-A- 5 570 007
- US-A- 6 121 758

## Beschreibung

Die Erfindung betrifft eine Einrichtung zum Austausch elektrischer Leistung mit einem Wechselspannungsnetz mit einem Netzanschluss zum Anschließen des Wechselspannungsnetzes, einer mit dem Netzanschluss verbundenen Hauptanlage, die eine in das Wechselspannungsnetz einspeisbare elektrische Leistung bereitstellt, einer Blindleistungskompensationsanlage mit mehreren Schaltzweigen, die jeweils über eine Einheit mit einer kapazitiven oder induktiven Impedanz verfügen und mittels eine ansteuerbaren Schalteinheit mit dem Netzanschluss in Parallelschaltung zum Wechselspannungsnetz verbindbar sind, und einer Regelungseinheit zum Regeln des Leistungsaustausches, die über eine Regelungskennlinie verfügt, an Hand derer eine auszutauschende Blindleistung bestimmt wird, um eine gewünschte Spannungsänderung an dem Netzanschluss einzustellen, wobei die Regelungseinheit Sondierungsmittel aufweist, die zum Erfassen einer Netzcharakteristik des angeschlossenen Wechselspannungsnetzes nach einer Spannungsänderung eingerichtet sind, und die Festlegung der zu schaltenden Schaltzweige auf der Grundlage der ermittelten Netzcharakteristik erfolgt.

Die Erfindung betrifft ferner ein Verfahren zum Regeln eines Blindleistungsaustauschs zwischen einem Wechselspannungsnetz und einer Einrichtung, die zum Einspeisen einer elektrischen Leistung in das Wechselspannungsnetz eingerichtet ist.

Eine solche Einrichtung und ein solches Verfahren sind aus der Praxis bereits bekannt. So umfasst beispielsweise ein in der See angeordneter Windpark eine Vielzahl von Windgeneratoren. Die von den Windgeneratoren erzeugte elektrische Leistung wird beispielsweise mittels eines Unterwasserkabels an einen landseitig angeordneten Netzanschluss übertragen. An dem Netzanschluss ist ein landseitiges Energieversorgungsnetz angeschlossen, das von dem Windpark mit Elektroenergie versorgt wird. Zum Ausgleich von Spannungsschwankungen, die beispielsweise bei Fehlern im Wechselspannungsnetz auftreten können, ist eine Blindleistungskompensationsanlage vorgesehen, die mit dem Windpark zusammenwirkt, so dass an dem Netzanschluss ein gewünschter Blindleistungsaustausch stattfinden kann, welcher der Spannungsschwankung entgegenwirkt.

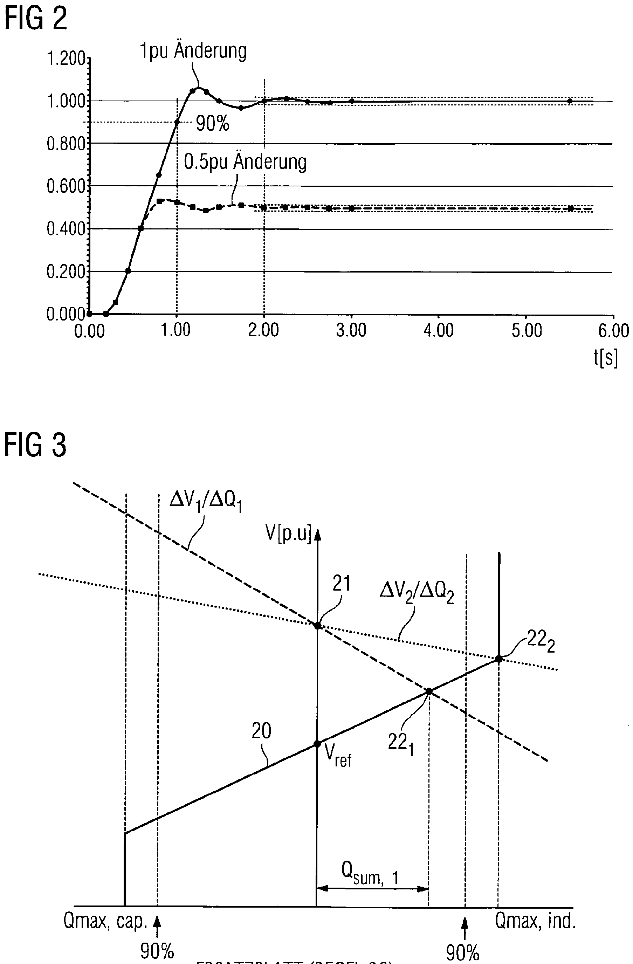

An solche Einrichtungen mit seeseitigem Windpark und landseitiger Blindleistungskompensationsanlage werden verschiedene Anforderungen gestellt. Eine, die für die hier vorliegende Erfindung wesentlich ist, wird im Zusammenhang mit Figur 2 erläutert:
In Figur 2 ist auf der x-Achse die Zeit in Sekunden dargestellt, während auf der Ordinate oder y-Achse die Änderung der ausgetauschten Blindleistung bezogen auf die Nennblindleistung abgetragen ist. Die dargestellten Kurven verdeutlichen das von einer solchen Einrichtung geforderte Ansprechverhalten. Es ist gefordert, dass bei Eintritt einer plötzlichen Spannungsschwankung bereits nach einer Sekunde 90% der gewünschten Blindleistung am Netzanschlusspunkt bereitgestellt werden. Die zweite Anforderung, welche an die Regelungsdynamik einer solchen Einrichtung gestellt wird, lautet, dass nach zwei Sekunden die Schwankung der bereitgestellten Blindleistung kleiner ist als 5% bezogen auf den jeweiligen Mittelwert gemessen von Maximum zu Minimum der Schwankungen. Die obere Kurve verdeutlicht diese Anforderungen bei einer gewünschten Änderung der Blindleistung, die am Netzanschluss bereitgestellt wird, von in den Einheiten p.u., wobei die Abkürzung p.u. für per unit steht. Damit wird ausgedrückt, dass die Blindleistung auf die Nennleistung normiert ist.

Um insbesondere dem zweiten Teil dieser Anforderungen gerecht werden zu können, weisen vorbekannte Einrichtungen als Blindleistungskompensationsanlagen so genannte "Static Var Compensators" oder auch Statcom-Anlagen auf, die mit schnell ansprechenden Leistungshalbleiterschaltern ausgerüstet sind, so dass eine hohe Regeldynamik bereitgestellt ist. Solche Blindleistungskompensationsanlagen sind jedoch kostenintensiv.

Beispielsweise beschreibt die Druckschrift US 5 570 007 A eine einen Static VAR Compensator (SVC), bei dem Thyristorventile zur Blindleistungskompensation eingesetzt werden. Zur Blindleistungsregelung wird aus einer Messung eines SVC-Blindleitwertes und einer Schätzung eines zu bereitstellenden Blindleitwertes ein Ansteuersignal zur Steuerung der Thyristorventile generiert, so dass ein entsprechender Blindstrom bereitgestellt werden kann.

Aus dem Stand der Technik sind ferner Blindleistungskompensationsanlagen mit Schaltzweigen bekannt, die eine Induktivität oder Kapazität sowie eine mechanische Schalteinheit aufweisen. Durch Schließen der Schalteinheiten werden die Kapazitäten oder Induktivitäten einem Wechselspannungsnetz parallel geschaltet, so dass sich in dem Wechselspannungsnetz eine gewünschte Blindleistung einstellt. Mechanische Schalteinheiten sind jedoch im Vergleich zu elektrischen Halbleiterschaltern langsam, so dass nach herrschender Meinung eine Anwendung mechanischer Schalter bei der eingangs genannten Einrichtung ausschied.

Eine Vorrichtung zur Blidleistungskompensation, bei der mechanische Schalter verwendet werden, ist beispielsweise in der Druckschrift FR 2 693 602 A1 offenbart.

Weitere Vorrichtungen und Verfahren zum Austausch elektrischer Leistung mit einem Wechselspannungsnetz sind aus den Druckschriften US 6 121 758 A, EP 0 446 451 A2, WO 2009/083448 A2 und EP 0 438 059 A2 bekannt.

Aufgabe der Erfindung ist es, eine Vorrichtung und ein Verfahren der eingangs genannten Art bereitzustellen, die den Anforderungen an die Regeldynamik gerecht werden und die gleichzeitig kostengünstig sind.

Die Erfindung löst diese Aufgabe dadurch, dass jede Schalteinheit eine mechanische Schalteinheit ist, so wie in der in Anspruch 1 definierten Vorrichtung beschrieben.

Ferner löst die Erfindung diese Aufgabe durch ein Verfahren nach Anspruch 4 zum Regeln eines Blindleistungsaustauschs zwischen einem Wechselspannungsnetz und einer Einrichtung, die zum Einspeisen einer elektrischen Leistung in das Wechselspannungsnetz zum kontinuierlichen Erzeugen und Aufnehmen von Blindleistung eingerichtet ist, und eine Blindleistungskompensationsanlage mit mehreren Schaltzweigen aufweist, die jeweils über eine Einheit mit einer kapazitiven oder induktiven Impedanz verfügen und mittels einer ansteuerbaren mechanischen Schalteinheit mit dem Netzanschluss in Parallelschaltung zum Wechselspannungsnetz verbindbar sind, so dass durch Schließen der Schalter in diskreten Schritten Blindleistung an einem Netzanschluss der Einrichtung bereitgestellt wird, wobei das Verfahren folgende Schritte aufweist:
- Erfassen einer Spannungsänderung am Netzanschluss,
- Bestimmen einer Netzcharakteristik des angeschlossenen Wechselspannungsnetzes bei Feststellung einer sprunghaften Spannungsänderung,
- Festlegen der zu schaltenden mechanischen Schalteinheiten in Abhängigkeit der ermittelten Netzwerkcharakteristik,
- Schalten der ausgewählten Schalteinheiten.

Erfindungsgemäß werden nicht wie beim Stand der Technik eine Blindleistungskompensationsanlage mit elektronischen Schalteinheiten eingesetzt. Statt dessen verfügt die erfindungsgemäße Einrichtung über vergleichsweise langsame mechanische Schalteinheiten, die induktive oder kapazitive Lasten, beispielsweise Spulen, Kondensatoren und dergleichen, in Parallelschaltung zum Wechselspannungsnetz mit dem Netzanschluss verbinden oder von diesem trennen. Solche Schaltzweige werden in der Fachwelt auch als MSR oder MSC, einer Kurzform für "Mechanically Switched Reactors" und "Mechanically Switched Capacitors" bezeichnet. Um beim Zuschalten der Schaltzweige nicht iterativ vorgehen zu müssen, also Schaltzweige versuchsweise mit dem Netzanschluss zu verbinden und wieder zu trennen, wird vor dem Schalten einer Schalteinheit oder einer Anzahl von Schalteinheiten die Netzcharakteristik ermittelt. Mit Hilfe der Netzcharakteristik ist es möglich, die Anzahl und die Art der zu schaltenden Schaltzweige so abzuschätzen, dass nur ein Schaltvorgang ausreicht, um die gewünschte Blindleistung bereitzustellen. Zunächst wird im Rahmen der Erfindung eine Spannungsänderung festgestellt. Um nun die notwendige Anzahl induktiver oder kapazitiver Schaltzweige zuschalten zu können, wird zunächst die Netzcharakteristik des angeschlossenen Wechselspannungsnetzes ermittelt. Eine Spannungsänderung ist in der Regel ein Indiz dafür, dass sich die Netzcharakteristik, beispielsweise durch Ausfall eines Kraftwerkes, einen Kurzschluss oder dergleichen, verändert hat. Die Ermittlung der sich daraus ergebenden Netzcharakteristik wird von der Regelungseinheit der Einrichtung durchgeführt. Ist die Netzcharakteristik bestimmt, wird auf Grundlage eines internen Datenabgleichs die Anzahl und die Art der zu schaltenden Netzzweige ermittelt. So wird beispielsweise festgelegt, wie viele induktive oder kapazitive Schaltzweige erforderlich sind, um einen gewünschten Sollzustand bei der Regelung zu erhalten. Hierfür liegen der Regelungseinheit die notwendigen Parameter der Schaltzweige beispielsweise tabellarisch vor.

Nach dem Schalten der Schaltzweige, also dem Verbinden mit oder dem Trennen von dem Netzanschluss kann die Regelung der Einrichtung nach den üblichen Kriterien erfolgen. Kern der Erfindung ist somit die Ermittlung der Netzcharakteristik nach einer Spannungsänderung und die Bestimmung der Anzahl und der Art der zu- oder abzuschaltenden Schaltzweige, um iteratives Zu- und Abschalten zu vermeiden. Auf diese Art und Weise ist es im Rahmen der Erfindung möglich, kostengünstig eine Einrichtung der eingangs genannten Art bereitzustellen, die den Anforderungen an die Regeldynamik genügt.

Gemäß einer zweckmäßigen Ausgestaltung der Erfindung weisen die Sondierungsmittel Mittel zum Erfassen einer Spannungsänderung und Blindleistungsänderung an dem Netzanschluss auf, wobei die Netzcharakteristik dem Quotienten ΔV/ΔQ aus Spannungsänderung ΔV und Blindleistungsänderung ΔQ entspricht. Gemäß dieser vorteilhaften Weiterentwicklung der Erfindung wird die Netzcharakteristik auf der Grundlage eines so genannten Kurzschlusslevels bestimmt, das dem Quotienten ΔV/ΔQ näherungsweise gleichgesetzt werden kann. Dank des Kurzschlusslevels kann die Regelungseinheit auf einfache Art und Weise, beispielsweise mit Hilfe einer einfachen Interpolation, ermitteln, wie viel und welche Schaltzweige beispielsweise zu schließen sind, um durch Einspeisen beispielsweise induktiver Blindleistung die am Netzanschluss angestiegene Spannung möglichst nahe an die Regelungskennlinie zu bringen. Dabei muss sichergestellt bleiben, dass durch das Schalten der Schaltzweige einerseits und die durch die Hauptanlage bereitgestellte Blindleistung andererseits die Regelungskennlinie auch tatsächlich erreicht werden kann. Die Regelungsbereiche der Hauptanlage und der Blindleistungskompensationsanlage müssen sich mit anderen Worten überlappen.

Zweckmäßigerweise ist die Hauptanlage ein Windpark, eine Solaranlage oder eine Hochspannungsgleichstromübertragungsanlage. Für alle diese Hauptanlagen stellt die Erfindung eine einfache Möglichkeit dar, den Anforderungen, die an eine Einrichtung mit Blindleistungskompensationsanlage gestellt ist, kostengünstig gerecht zu werden.

Gemäß der Erfindung weist die Regelungseinheit eine Hauptanlagenregelung zum Regeln der Hauptanlage, also beispielsweise eines Windparks, und eine Blindleistungskompensationsanlagenregelung zum Regeln der Blindleistungskompensationsanlage auf, wobei die Sondierungsmittel Teil der Blindleistungskompensationsanlagenregelung sind. Eine solche Aufteilung der Regelungseinheit hat sich in der Praxis als zweckmäßig erwiesen.

Die Sondierungsmittel sind beispielsweise Messsensoren zum Erfassen einer Spannung am Netzanschluss und zum Erfassen eines am Netzanschluss fließenden Stromes. Die Sondierungsmittel umfassen ferner Mittel zum Berechnen einer Blindleistung auf der Grundlage der erfassten Messwerte.

Gemäß einer Fortentwicklung des erfindungsgemäßen Verfahrens wird zum Erfassen der Netzwerkcharakteristik die mit dem Wechselspannungsnetz am Netzanschluss ausgetauschte Blindleistung geändert, wobei die sich hierbei ergebende Blindleistungsänderung sowie eine Spannungsänderung in Folge der besagten Blindleistungsänderung am Netzanschluss ermittelt werden und die Netzcharakteristik durch Bildung des Quotienten ΔV/ΔQ aus Spannungsänderung und Blindleistungsänderung ermittelt wird. Die Änderung der Blindleistung erfolgt zweckmäßigerweise durch die Hauptanlage. Ist die Hauptanlage beispielsweise ein Windpark, verursacht die Windparkregelung nach dem Erfassen einer sprunghaften Spannungsänderung am Netzanschluss eine schnelle Änderung der mit dem angeschlossenen Wechselspannungsnetz ausgetauschten Blindleistung, die am Netzanschlusspunkt erfasst wird. Die sich hieraufhin einstellende Spannungsänderung wird durch die Topologie des angeschlossenen Wechselspannungsnetzes bestimmt. Durch die Quotientenbildung ΔV/ΔQ ist somit eine Aussage über die Netzwerkcharakteristik möglich. Hieraufhin kann dann eine passende Auswahl von Schaltzweigen erfolgen. Bei dieser Auswahl wird auf tabellarisch vorliegende Parameter der Schaltzweige zugegriffen. Die Parameter sind beispielsweise die Kapazität des Kondensators oder die Induktivität der Spule des jeweiligen Schaltzweiges. Mit diesen Parametern kann die Blindleistungsänderung bestimmt werden, die sich durch Schalten des jeweiligen Netzzweiges am Netzanschluss bereitgestellt würde. Mit Hilfe des Quotienten ΔV/ΔQ kann anschließend die sich einstellende Spannungsänderung berechnet werden. Die Auswahl der Schaltzweige ist dann gefunden, wenn die berechnete Spannungsänderung den Betriebspunkt der Einrichtung möglichst nahe an die Regelkennlinie bringt.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen, wobei
- Figur 1: ein Ausführungsbeispiel der erfindungsgemäßen Einrichtung zeigt,
- Figur 2: die bereits im Eingang der Beschreibung besprochenen Anforderungen an eine Einrichtung gemäß Figur 1 darstellt und
- Figur 3: die Wirkungsweise eines Ausführungsbeispiels der erfindungsgemäßen Einrichtung und des erfindungsgemäßen Verfahrens schematisch verdeutlicht.

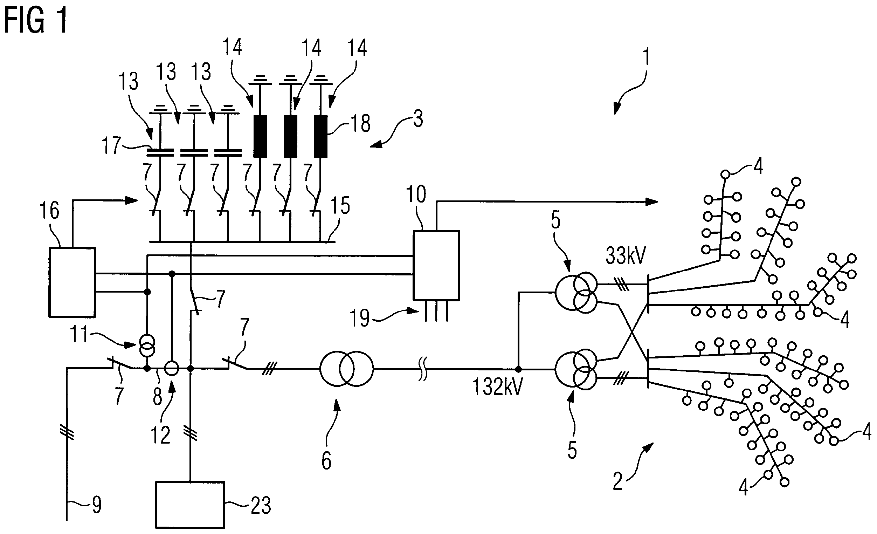

Figur 1 zeigt ein Ausführungsbeispiel der erfindungsgemäßen Einrichtung 1, die einen Windpark 2 sowie eine Blindleistungskompensationsanlage 3 aufweist. Der Windpark 2 besteht aus einer Vielzahl von Windrädern 4, die durch Wind in Rotation versetzt werden. Dabei wird ein Windgenerator angetrieben, der elektrische Spannung erzeugt. Der Windpark 2 ist auf See angeordnet, wobei die Windgeneratoren über zweckmäßige Kabelverbindungen mit einem ebenfalls auf See angeordneten Transformator 5 verbunden sind. Bei der Darstellung in Figur 1 sind gegebenenfalls vorhandene Schalter, Kabelverbindungen oder dergleichen aus Gründen der Übersichtlichkeit nicht gezeigt. Transformator 5 dient zum seeseitigen Transformieren einer Mittelspannung von 33 kV auf eine Hochspannung von 132 KV. Mit Hilfe eines Unterwasserkabels wird der seeseitige Transformator 5 mit einem landseitigen Transformator 6 verbunden, der über eine Schalteinheit 7 mit einem Netzanschluss 8 verbunden ist. Der Netzanschluss 8 ist über eine weitere mechanische Schalteinheit 7 an ein Wechselspannungsnetz 9 angeschlossen.

Zum Regeln der vom Windpark 2 in das Wechselspannungsnetz 9 eingespeisten elektrischen Leistung dient eine Windparkregelung 10. Die Verbindung der Windparkregelung 10 mit den jeweiligen Windrädern 4 ist mit Hilfe des dargestellten Pfeils nur schematisch verdeutlicht. Darüber hinaus ist die Windparkregelung 10 mit einem Spannungssensor 11 sowie mit einem Stromsensor 12 verbunden, die am Netzanschluss 8 eine Spannung Vn beziehungsweise einen Strom In erfassen.

Die Blindleistungskompensationsanlage 3 verfügt über Schaltzweige 13 und 14, von denen jeder über eine Schalteinheit 7 mit einer Sammelschiene 15 verbunden ist. Die Sammelschiene 15 ist über einen weiteren Schalter oder Trenner 7 an den Netzanschluss 8 angeschlossen.

Es ist erkennbar, dass die Schaltzweige 13 Kondensatoren, also eine kapazitive Einheit 17, aufweisen, während in den Schaltzweigen 14 induktive Einheiten 18 in Form von Spulen angeordnet sind. Dabei sind die Schaltzweige 13 und 14 an ihrer von den Schalteinheiten 7 abgewandten Ende geerdet, so dass die Schaltzweige durch Schließen der Schalteinheit 7 mit dem Netzanschlusspunkt 8 verbunden und parallel zum Wechselspannungsnetz 9 geschaltet sind. Die Blindleistungskompensationsanlage 3 verfügt ferner über eine Blindleistungskompensationsanlagenregelung 16, die ebenfalls mit dem Spannungssensor 11 und dem Stromsensor 12 des Netzanschlusses 8 verbunden ist. Darüber hinaus ist die Blindleistungskompensationsanlagenregelung 16 über Kommunikationsleitungen mit den Schalteinheiten 7 verbunden. Die Kommunikationsleistungen sind in Figur 1 durch einen Pfeil schematisch dargestellt. In Figur 1 ist ferner angedeutet, dass die Windparkregelung 10 noch weitere Eingänge 19 aufweisen kann, auf die hier jedoch nicht eingegangen zu werden braucht. Der Netzanschluss 8 ist ferner mit Filtern 23 zum Filtern von Oberschwingungen verbunden. Die Wirkungsweise und das Regelungsverfahren der Einrichtung gemäß Figur 1 wird nun im Zusammenhang mit Figur 3 verdeutlicht.

In Figur 3 ist die am Netzanschluss 8 abfallende Spannung in willkürlichen Einheiten (p.u.) auf der γ-Achse abgetragen. Die x-Achse steht für die am Netzanschluss 8 erfasste Blindleistung, wobei in der rechten Hälfte induktive und in der linken Hälfte kapazitive Blindleistungen abgetragen sind. Ferner ist eine Regelungskennlinie 20 erkennbar. Die Regelungskennlinie weist die Gestalt einer Geraden auf, die sich von einer maximalen kapazitiven Blindleistung Q_{max,cap}. bis zu einer maximalen induktiven Blindleistung Q_{max,ind}. erstreckt. Die Steigung dieser Geraden ist ungleich Null. Dies bedeutet, dass die Regelung Spannungstoleranzen gegenüber der gewünschten Sollspannung Vref zulässt. Im Normalbetrieb folgt die Spannung am Netzanschluss exakt der Regelungskennlinie 20. Es wir beispielhaft angenommen, dass sich der Betriebspunkt bei Q=0 und Vref befindet, wenn ein Zwischenfall im Wechselspannungsnetz 9 zu einem sprunghaften Spannungsanstieg am Netzanschluss 8 führt. Die sich hierbei einstellende Spannung ist in Figur 3 mit dem Bezugszeichen 21 referenziert.

Um den Anforderungen gemäß Figur 2 gerecht zu werden, muss die Blindleistungskompensationsanlage 3 so viel Blindleistung einspeisen, dass die Regelungskennlinie 20 innerhalb von 1 s erreicht wird. Nach 2 s dürfen nur die Schwankungen der Blindleistung nur noch weniger als 5% (Maximum zu Minimum) bezogen auf den Mittelwert betragen. Im Falle einer sprunghaften Spannungsänderung am Netzanschluss 8 ist das so genannte Kurzschlusslevel des mit dem Netzanschluss verbundenen Wechselspannungsnetz 9 und somit die notwendige Blindleistung nicht bekannt, die notwendig ist, um zur Regelkennlinie zurückzukehren. Um häufiges Zu- und Abschalten von Schaltzweigen 13 oder 14 zu vermeiden, wird daher das Kurzschlusslevel als Netzwerkcharakteristik ermittelt. Dies erfolgt durch Bildung des Quotienten ΔV/ΔQ. Aus diesem Grunde wird eine Blindleistungsänderung nach dem Erfassen der Spannungsschwankung am Netzanschluss 8 von der Windparkregelung 10 durchgeführt. Dieser Vorgang sollte erst nach einer Zeitdauer von 500 ms abgeschlossen sein, um möglichst genaue Messwerte zu erhalten. Die Windparkregelung 10 regelt hierbei die Windräder 4 in einer Weise, dass sich eine Blindleistungsänderung ΔQ am Netzanschluss 8 einstellt, welche durch den Stromsensor 12 sowie den Spannungssensor 11 erfasst werden kann. Anschließend kann der gewünschte Quotient ΔV/ΔQ gebildet werden.

Wird beispielsweise eine Spannungsänderung ΔV1 und die Blindleistungsänderung ΔQ1 festgestellt, ergibt sich eine Blindleistung Q_{summ,1}, die von der Blindleistungskompensationsanlage 3 aufgebracht werden muss, wie in Figur 3 schematisch dargestellt ist. Die Anzahl der induktiven Schaltzweige 14 ist nun so auszuwählen, dass nach ihrem Einschalten die sich darauf ergehende Blindleistung möglichst nahe dem Wert Q_{summ,1} ist. Da die elektrischen Bauteile der Schaltzweige 14 bekannt sind und ihre Eigenschaften in Gestalt von Parametern der Blindleistungskompensationsanlagenregelung 16 vorliegen, kann die Anzahl der einzuschaltenden Schaltzweige 14 einfach ermittelt werden. Die Festlegung der Netzwerkcharakteristik ΔV1, ΔQ1 erfolgt innerhalb eines Zeitfensters von etwa 500 ms, so dass sich nach den sprunghaften Spannungsänderungen die meisten transienten Effekte abgeklungen sind. Hat die Blindleistungskompensationsanlagenregelung 16 die Anzahl und die Art die Schaltzweige 14 bestimmt, steuert es eine entsprechende Anzahl von Schaltzweigen 13, 14 so an, dass diese mit dem Netzanschluss 8 verbunden werden und die notwendige Blindleistung bereitgestellt ist, um der Regelcharakteristik 20 möglicht nahe zu kommen. Dieser Betriebspunkt ist mit dem Bezugszeichen 22₁ referenziert.

Bei dem zweiten in Figur 3 dargestellten Ausführungsbeispiel wurde die Netzwerkcharakteristik mit ΔV2/ΔQ2 ermittelt, die in Figur 3 mit einer Geraden dargestellt ist, welche eine geringere Steigung aufweist. Der zu erreichende Betriebspunkt ist mit 22₂ bezeichnet. Bei der Bestimmung der Anzahl und Art der Schaltzweige 13 beziehungsweise 14 sind die Maxima der Regelungskennlinie 20 zu berücksichtigen.

## Patentansprüche

1. Einrichtung (1) zum Austausch elektrischer Leistung mit einem Wechselspannungsnetz (9) mit
- einem Netzanschluss (8) zum Anschließen des Wechselspannungsnetzes (9),
- einer mit dem Netzanschluss (8) verbundenen Hauptanlage (2), die eine in das Wechselspannungsnetz (9) einspeisbare elektrische Leistung bereitstellt,
- einer Blindleistungskompensationsanlage (3) mit mehreren Schaltzweigen (13,14), die jeweils über eine Einheit (17,18) mit einer kapazitiven oder induktiven Impedanz verfügen und mittels eine ansteuerbaren Schalteinheit (7) mit dem Netzanschluss (8) in Parallelschaltung zum Wechselspannungsnetz (9) verbindbar sind, und
- einer Regelungseinheit (10,16) angepasst zum Regeln des Leistungsaustausches, die über eine Regelungskennlinie verfügt, an Hand derer eine auszutauschende Blindleistung ΔQ bestimmt wird, um eine gewünschte Spannungsänderung ΔV an der Netzanschlusseinheit (8) einzustellen, wobei die Regelungseinheit (10,16) Sondierungsmittel aufweist, die zum Erfassen einer Netzcharakteristik des angeschlossenen Wechselspannungsnetzes (9) bei einer Spannungsänderung eingerichtet sind, und die Festlegung der zu schaltenden Schaltzweige (13,14) auf der Grundlage der ermittelten Netzcharakteristik erfolgt, um beim Zuschalten der Schaltzweige nicht iterativ vorgehen zu müssen, wobei jede Schalteinheit eine mechanische Schalteinheit (7) ist, wobei die Regelungseinheit eine Hauptanlagenregelung (10) zum Regeln der Hauptanlage (2) und eine Blindleistungskompensationsanlagenregelung (16) zum Regeln der Blindleistungskompensationsanlage umfasst, wobei die Sondierungsmittel Teil der Blindleistungskompensationsanlagenregelung (16) sind.

2. Einrichtung (1) nach Anspruch 1,
**dadurch gekennzeichnet, dass**
die Sondierungsmittel Mittel (11,12) zum Erfassen einer Spannungsänderung ΔV und Blindleistungsänderung ΔQ an dem Netzanschluss (8) aufweisen, wobei Berechnungsmittel vorgesehen sind, welche die Netzcharakteristik durch Bildung des Quotienten ΔV/ΔQ aus Spannungsänderung und Blindleistungsänderung festlegen.

3. Einrichtung (1) nach einem der Ansprüche 1 oder 2,
**dadurch gekennzeichnet, dass**
die Hauptanlage ein Windpark (2), eine Solarenergieanlage oder eine Hochspannungsgleichstromübertragungsanlage ist.

4. Verfahren zum Regeln eines Blindleistungsaustauschs zwischen einem Wechselspannungsnetz (9) und einer Einrichtung (1), die zum Einspeisen einer elektrischen Leistung in das Wechselspannungsnetz (9) eingerichtet ist, wobei die Einrichtung (1) eine Hauptanlage (2), die zum kontinuierlichen Erzeugen und Aufnehmen von Blindleistung eingerichtet ist, und eine Blindleistungskompensationsanlage (3) mit mehreren Schaltzweigen (13,14) aufweist, die jeweils über eine Einheit (17,18) mit einer kapazitiven oder induktiven Impedanz verfügen und mittels einer ansteuerbaren mechanischen Schalteinheit (7) mit dem Netzanschluss (8) in Parallelschaltung zum Wechselspannungsnetz (9) verbindbar sind, so dass durch Schließen der Schalter (7) in diskreten Schritten Blindleistung Q an einem Netzanschluss (8) der Einrichtung bereitgestellt wird, wobei das Verfahren folgende Schritte aufweist
- Erfassen einer Spannungsänderung ΔV am Netzanschluss (8),
- Bestimmen einer Netzcharakteristik des angeschlossenen Wechselspannungsnetzes (9), mittels dazu vorgesehener Sondierungsmittel bei Feststellung einer sprunghaften Spannungsänderung ΔV, wobei die Regelungseinheit eine Hauptanlagenregelung (10) zum Regeln der Hauptanlage (2) und eine Blindleistungskompensationsanlagenregelung (16) zum Regeln der Blindleistungskompensationsanlage umfasst, wobei die Sondierungsmittel Teil der Blindleistungskompensationsanlagenregelung (16) sind,
- Festlegen der zu schaltenden mechanischen Schalteinheiten (7) in Abhängigkeit der ermittelten Netzwerkcharakteristik, um eine gewünschte Spannungsänderung ΔV an der Netzanschlusseinheit (8) einzustellen ohne beim Zuschalten der Schaltanlage iterativ vorgehen zu müssen,
- Schalten der ausgewählten Schalteinheiten (7).

5. Verfahren nach Anspruch 4,
**dadurch gekennzeichnet, dass**
zum Erfassen der Netzwerkcharakteristik die mit dem Wechselspannungsnetz (9) am Netzanschluss (8) ausgetauschte Blindleistung geändert und die sich hierbei ergebende Blindleistungsänderung ΔQ sowie eine Spannungsänderung ΔV in Folge der besagten Blindleistungsänderung ΔQ am Netzanschlusspunkt (8) ermittelt werden und die Netzcharakteristik durch Bildung des Quotienten ΔV/ΔQ aus Spannungsänderung ΔV und Blindleistungsänderung ΔQ bestimmt wird.

6. Verfahren nach Anspruch 5,
**dadurch gekennzeichnet, dass**
die Hauptanlage (2) die Blindleistung ändert.

## Claims

1. Device (1) for exchanging electrical power with an AC network (9), having
- a network connection (8) for connecting the AC network (9),
- a main installation (2) which is connected to the network connection (8) and provides an electrical power which can be fed into the AC network (9),
- a reactive power compensation installation (3) having a plurality of switching branches (13, 14) which each have a unit (17, 18) having a capacitive or inductive impedance and can be connected to the network connection (8) in parallel with the AC network (9) by means of a controllable switching unit (7), and
- a control unit (10, 16) adapted to control the exchange of power, which control unit has a control characteristic curve, on the basis of which a reactive power ΔQ to be exchanged is determined in order to set a desired voltage change ΔV at the network connection unit (8), wherein the control unit (10, 16) has probing means which are configured to capture a network characteristic of the connected AC network (9) in the event of a voltage change, and the switching branches (13, 14) to be switched are determined on the basis of the determined network characteristic in order to avoid having to proceed iteratively when connecting the switching branches, wherein each switching unit is a mechanical switching unit (7), wherein the control unit comprises a main installation controller (10) for controlling the main installation (2) and a reactive power compensation installation controller (16) for controlling the reactive power compensation installation, wherein the probing means are part of the reactive power compensation installation controller (16).

2. Device (1) according to Claim 1,
**characterized in that**
the probing means have means (11, 12) for capturing a voltage change ΔV and a reactive power change ΔQ at the network connection (8), wherein calculation means are provided and determine the network characteristic by forming the quotient ΔV/ΔQ of the voltage change and reactive power change.

3. Device (1) according to either of Claims 1 and 2,
**characterized in that**
the main installation is a wind farm (2), a solar energy installation or a high-voltage DC transmission installation.

4. Method for controlling reactive power exchange between an AC network (9) and a device (1) which is configured to feed an electrical power into the AC network (9), wherein the device (1) has a main installation (2) which is configured to continuously generate and receive reactive power and a reactive power compensation installation (3) having a plurality of switching branches (13, 14) which each have a unit (17, 18) having a capacitive or inductive impedance and can be connected to the network connection (8) in parallel with the AC network (9) by means of a controllable mechanical switching unit (7), with the result that reactive power Q is provided at a network connection (8) of the device by closing the switches (7) in discrete steps, wherein the method has the following steps
- capturing a voltage change ΔV at the network connection (8),
- determining a network characteristic of the connected AC network (9) by means of probing means provided for this purpose when a sudden voltage change ΔV is determined, wherein the control unit comprises a main installation controller (10) for controlling the main installation (2) and a reactive power compensation installation controller (16) for controlling the reactive power compensation installation, wherein the probing means are part of the reactive power compensation installation controller (16),
- determining the mechanical switching units (7) to be switched on the basis of the determined network characteristic in order to set a desired voltage change ΔV at the network connection unit (8) without having to proceed iteratively when connecting the switching installation,
- switching the selected switching units (7).

5. Method according to Claim 4,
**characterized in that**
in order to capture the network characteristic, the reactive power exchanged with the AC network (9) at the network connection (8) is changed and the resulting reactive power change ΔQ and a voltage change ΔV as a result of said reactive power change ΔQ at the network connection point (8) are determined, and the network characteristic is determined by forming the quotient ΔV/ΔQ of the voltage change ΔV and the reactive power change ΔQ.

6. Method according to Claim 5,
**characterized in that**
the main installation (2) changes the reactive power.

## Revendications

1. Dispositif (1) d'échange de puissance électrique avec un réseau (9) de tension alternative, comprenant
- une borne (8) de réseau pour la connexion du réseau (9) de tension alternative,
- une installation (2) principale, qui est connectée à la borne (8) de réseau et qui met à disposition une puissance électrique pouvant être injectée dans le réseau (9) de tension alternative,
- une installation (3) de compensation de puissance réactive ayant plusieurs branches (13, 14) de coupure, qui disposent chacune d'une unité (17, 18) ayant une impédance capacitive ou inductive et qui peuvent, au moyen d'une unité (7) de coupure pouvant être commandée, être connectées à la borne (8) de réseau suivant un circuit en parallèle au réseau (9) de tension alternative, et
- une unité (10, 16) de régulation propre à réguler l'échange de puissance, qui dispose d'une caractéristique de régulation à l'aide de laquelle une puissance ΔQ réactive à échanger est déterminée pour régler une variation ΔV de tension souhaitée sur l'unité (8) de connexion au réseau, l'unité (10, 16) de régulation ayant des moyens de sondage conçus pour détecter une caractéristique du réseau (9) de tension alternative connectée, lorsqu'il y a une variation de tension, et la fixation des branches (13, 14) de coupure à mettre en circuit s'effectue sur la base de la caractéristique de réseau déterminée, afin de ne pas avoir à procéder itérativement, lors de la mise en circuit des branches de coupure, dans lequel chaque unité de coupure est une unité (7) de coupure mécanique, l'unité de régulation comprenant une régulation (10) d'installation principale pour réguler l'installation (2) principale et une régulation (16) d'installation de compensation de puissance réactive pour régler l'installation de compensation de puissance réactive, les moyens de sondage faisant partie de la régulation (16) d'installation de compensation de puissance réactive.

2. Dispositif (1) suivant la revendication 1,
**caractérisé en ce que**
les moyens de sondage ont des moyens (11, 12) de détection d'une variation ΔV de tension et d'une variation ΔQ de puissance réactive à la borne (8) de réseau, dans lequel il est prévu des moyens de calcul, qui fixent la caractéristique de réseau par formation du quotient ΔV/ΔQ à partir de la variation de tension et de la variation de puissance réactive.

3. Dispositif (1) suivant l'une des revendications 1 ou 2,
**caractérisé en ce que**
l'installation principale est un parc (2) éolien, une installation d'énergie solaire ou une installation de transport de courant continu sous haute tension.

4. Procédé de régulation d'un échange de puissance réactive entre un réseau (9) de tension alternative et un dispositif (1), conçu pour injecter une puissance électrique dans le réseau (9) de tension alternative, le dispositif (1) ayant une installation (2) principale, conçue pour produire et absorber en continu de la puissance réactive, et une installation (3) de compensation de puissance réactive ayant plusieurs branches (13, 14) de coupure, qui disposent chacune d'une unité (17, 18) ayant une impédance capacitive ou inductive et qui peuvent, au moyen d'une unité (7) de coupure mécanique pouvant être commandée, être connectées à la borne (8) de réseau suivant un circuit en parallèle au réseau (9) de tension alternative, de sorte que la fermeture de l'interrupteur (7) en des pas discrets met à disposition de la puissance Q réactive à une borne (8) de réseau du dispositif, le procédé ayant les stades suivants
- détection d'une variation ΔV de tension à la borne (8) de réseau,
- détermination d'une caractéristique du réseau (9) de tension alternative connecté, à l'aide de moyens de sondage prévus à cet effet, lors d'une variation ΔV brusque de tension, l'unité de régulation comprenant une régulation (10) d'installation principale pour réguler l'installation (2) principale et une régulation (16) d'installation de compensation de puissance réactive pour réguler l'installation de compensation de puissance réactive, les moyens de sondage faisant partie de la régulation (16) de l'installation de compensation de puissance réactive,
- fixation des unités (7) de coupure mécanique à mettre en circuit en fonction de la caractéristique de réseau déterminée, pour régler une variation ΔV de tension souhaitée à l'unité (8) de connexion de réseau, sans avoir à procéder itérativement, lors de la mise en circuit de l'installation de coupure,
- mise en circuit des unités (7) de coupure sélectionnées.

5. Procédé suivant la revendication 4,
**caractérisé en ce que**,
pour détecter la caractéristique du réseau, on fait varier la puissance réactive échangée avec le réseau (9) de tension alternative à la borne (8) de réseau et on détermine la variation ΔQ de puissance réactive qui s'ensuit, ainsi qu'une variation ΔV de tension à la suite de ladite variation ΔQ de puissance réactive au point (8) de connexion au réseau et on détermine la caractéristique de réseau par formation du quotient ΔV/ΔQ à partir de la variation ΔV de tension et la variation ΔQ de puissance réactive.

6. Procédé suivant la revendication 5,
**caractérisé en ce que**
l'installation (2) principale fait varier la puissance réactive.
